# EUROPÄISCHE PATENTSCHRIFT

(11) **EP 4 675 523 B1**
(45) Veröffentlichungstag und Bekanntmachung des Hinweises auf die Patenterteilung: **29.04.2026**
(21) Anmeldenummer: 24185979.2
(22) Anmeldetag: 02.07.2024
(51) Int. Cl.: G06Q 10/04, G06Q 50/02, G06Q 50/06

(54) **COMPUTERIMPLEMENTIERTES VERFAHREN ZUR BESTIMMUNG EINER KOLLISIONSWAHRSCHEINLICHKEIT VON FLUGLEBEWESEN MIT EINER ANTHROPOGENEN STRUKTUR**
COMPUTER-IMPLEMENTED METHOD FOR DETERMINING A COLLISION PROBABILITY OF AVIANS WITH AN ANTHROPOGENIC STRUCTURE
PROCÉDÉ MIS EN OEUVRE PAR ORDINATEUR POUR DÉTERMINER UNE PROBABILITÉ DE COLLISION D'AVIAIRES AVEC UNE STRUCTURE ANTHROPOGÈNE

(43) Veröffentlichungstag der Anmeldung: 07.01.2026
(73) Patentinhaber: Mercker, Moritz, 21129 Hamburg (DE)
(72) Erfinder: Mercker, Moritz, 21129 Hamburg (DE)
(74) Vertreter: Raffay & Fleck

(56) Entgegenhaltungen:
- PERI EREZ ET AL: "A sustainable way forward for wind power: Assessing turbines' environmental impacts using a holistic GIS analysis", APPLIED ENERGY, ELSEVIER SCIENCE PUBLISHERS, GB, vol. 279, 11 September 2020 (2020-09-11), XP086364037, ISSN: 0306-2619, [retrieved on 20200911], DOI: 10.1016/J.APENERGY.2020.115829
- YASIN SUNAK ET AL: "A GIS-based Decision Support System for the Optimal Siting of Wind Farm Projects", E.ON ENERGY RESEARCH CENTER SERIES, 1 June 2015 (2015-06-01), DE, pages 1 - 71, XP055217999, Retrieved from the Internet <URL:https://www.google.de/url?sa=t&rct=j&q=&esrc=s&source=web&cd=1&ved=0CB0QFjAAahUKEwjN-M7ruqPIAhWCchoKHeIzA6U&url=https%3A%2F%2Fwww.rwth-aachen.de%2Fglobal%2Fshow_document.asp%3Fid%3Daaaaaaaaaansgil%26download%3D1&usg=AFQjCNHlbVYhn-1O2p9scjq_VtWaKL7lbQ&bvm=bv.104317490,d.d2s&cad=rja>
- JESSICA WEBER ET AL: "Competing for space? A multi-criteria scenario framework intended to model the energy-biodiversity-land nexus for regional renewable energy planning based on a German case study", ENERGY, SUSTAINABILITY AND SOCIETY, BIOMED CENTRAL LTD, LONDON, UK, vol. 13, no. 1, 10 August 2023 (2023-08-10), pages 1 - 33, XP021322488, DOI: 10.1186/S13705-023-00402-7
- AUSGABE 13: "Umwelt Handbuch Windenergie MONIKA AGATZ", 13 December 2016 (2016-12-13), XP055903719, Retrieved from the Internet <URL:http://www.windenergie-handbuch.de/wp-content/uploads/2017/03/Windenergie-Handbuch-2016.pdf> [retrieved on 20220321]
- XU YE ET AL: "Site selection of wind farms using GIS and multi-criteria decision making method in Wafangdian, China", ENERGY, ELSEVIER, AMSTERDAM, NL, vol. 207, 2 July 2020 (2020-07-02), XP086241743, ISSN: 0360-5442, [retrieved on 20200702], DOI: 10.1016/J.ENERGY.2020.118222
- BASEER M A ET AL: "GIS-based site suitability analysis for wind farm development in Saudi Arabia", ENERGY, ELSEVIER, AMSTERDAM, NL, vol. 141, 5 October 2017 (2017-10-05), pages 1166 - 1176, XP085312090, ISSN: 0360-5442, DOI: 10.1016/J.ENERGY.2017.10.016

## Beschreibung

Die vorliegende Erfindung betrifft ein computerimplementiertes Verfahren zur Bestimmung einer Kollisionswahrscheinlichkeit von Tieren, insbesondere Fluglebewesen, insbesondere Vögeln und/oder Fledermäusen, mit anthropogenen Strukturen, wie z. B. einem Rotor einer Windenergieanlage, insbesondere bewegten anthropogenen Strukturen.

Die Auswirkungen von anthropogenen Strukturen, wie z. B. Windenergieplanungen, also die Errichtung und der Betrieb von Windenergieanlagen (WEA) auf Tiere, wie insbesondere Vögel, werden in vier Kategorien eingeteilt: Tötung (in der Regel durch Kollision mit den Rotorblättern, aber auch mit dem Turm), Verdrängung durch Störung, Barriere-Effekte (bzgl. z.B. ziehender Vögel), sowie direkter Habitatverlust bspw. durch Fundamente, Kranstellflächen oder Zuwegungen. Bei der Planung von WEA-Projekten ist vorgeschrieben, im Rahmen artenschutzrechtlicher Prüfungen diese Auswirkungen zu berücksichtigen, wobei die Tötung von Individuen von Fluglebewesen besonders berücksichtigt wird und es diese nach aller Möglichkeit zu vermeiden gilt. Analoge Betrachtungen gelten für weitere anthropogene Strukturen, wie z. B. Elektrizitäts-Freileitungen und andere Tiere; die folgenden Erläuterungen beziehen sich exemplarisch auf Vögel und WEA.

In der derzeitigen artenschutzrechtlichen Prüfung, die vor der Genehmigung des Neubaus oder eines Repowerings einer WEA durchgeführt wird, muss speziell untersucht werden, ob und inwieweit die geplante Anlage das Risiko von Kollisionen für Fluglebewesen, wie z.B. dem Rotmilan, erhöht. Diese Prüfungen basieren auf dem Bundesnaturschutzgesetz (BNatSchG), das den Schutz streng geschützter Arten, wie eben des Rotmilans, sicherstellt.

Laut den aktuellen Richtlinien und Empfehlungen müssen potenzielle Standorte für Windenergieanlagen hinsichtlich ihrer Nähe zu bekannten Bezugspunkten von relevanten Fluglebewesen, wie z.B. zu Brutplätzen des Rotmilans, bewertet werden (Distanz zwischen WEA und dem Bezugspunkt, wie einem Brutplatz). Dabei wird untersucht, ob die geplante Anlage in einem kritischen Radius zu solchen Bezugspunkten liegt. Je nachdem in welchem Radius um den Bezugspunkt die geplante (oder repowerte) WEA stehen soll/steht, darf entweder keine Genehmigung erteilt werden (bspw. im Nahbereich unter 500 m zu einem Brutplatz eines Rotmilans), oder nur unter zusätzlichen Auflagen (z. B. im Bereich zwischen 500-1200 m Abstand zu einem Brutplatz eines Rotmilans) bzw. unter Erbringung des Nachweises, dass kein (rechtlich) signifikantes Tötungsrisiko besteht. Dafür kann bspw. eine sogenannte Raumnutzungsanalyse (RNA) durchgeführt werden, bei der über mehrere Monate bis hin zu mehreren Jahren von Erfassenden vor Ort die Flugmuster der Fluglebewesen einer Art von Interesse erfasst werden. So kann zusätzlich beurteilt werden, ob eine Gefahr von der geplanten (oder zu repowernden) WEA ausgeht.

Wenn festgestellt wird, dass eine signifikante Bedrohung für eine relevante Art von Fluglebewesen, z.B. einen brütenden Rotmilan, besteht, können Maßnahmen zur Risikominderung gefordert werden, oder die Genehmigung kann unter Auflagen erteilt oder sogar verweigert werden. Solche Auflagen können Betriebsbeschränkungen während der Brutzeit umfassen oder die technische Anpassung der Anlagen zur Minimierung von Kollisionen.

Die Raumnutzungsanalyse (RNA) und die o. g. abstandsbasierten Regelungen zur Standortwahl von Windenergieanlagen stehen zunehmend in der Kritik. Einige der Hauptkritikpunkte beziehen sich auf die Effektivität dieser Methoden in Bezug auf den Artenschutz und die Anpassungsfähigkeit der Richtlinien an neue wissenschaftliche Erkenntnisse. Die RNA wird oft dafür kritisiert, dass sie die tatsächlichen Aktivitätsmuster und die Habitatnutzung von Fluglebewesen, etwa Vögeln wie dem Rotmilan, möglicherweise nicht genau genug erfasst. Die Untersuchungsmethoden können in ihrer Genauigkeit variieren und nicht immer die dynamischen Veränderungen der Tieraktivitäten im Laufe der Zeit widerspiegeln. Darüber hinaus sind die Ergebnisse der RNA stark von der Qualität der durchgeführten Studien und der Interpretation der gesammelten Daten abhängig. Abstandsempfehlungen, wie sie in Leitfäden festgelegt sind, stehen ebenfalls in der Kritik. Es gibt Bedenken, dass diese starren Abstandsregeln nicht immer die spezifischen ökologischen Gegebenheiten oder die unterschiedlichen Verhaltensweisen und örtlichen Verbreitungsmuster der relevanten Arten berücksichtigen. Stark zusammengefasst besteht die Kritik des Naturschutzes in der Sorge, dass unsachgemäße (zu stark vereinfachende) Methoden und Objektivität eine zunehmende Gefährdung der betrachteten Art, wie z.B. von Brutvögeln, im Kontext des Windenergieausbaus mit sich zieht, wohingegen die Windenergiebranche befürchtet, dass aktuelle Methoden erstens viel zu lange dauern (bspw. RNA) und damit die geplante Beschleunigung eines Ausbaus der Windenergie ausbremsen und zudem die starke Vereinfachung einen Schutz von sowieso schon raren Flächen bewirkt, in denen ggf. kein signifikantes Tötungsrisiko existiert.

PERI EREZ ET AL beschreiben in "A sustainable way forward for wind power: Assessing turbines' environmental impacts using a holistic GIS analysis", APPLIED ENERGY, ELSEVIER SCIENCE PUBLISHERS, GB, Bd. 279, 2020-09-11, ISSN: 0306-2619, DOI: 10.1016/J.APENERGY.2020.115829 ein bekanntes Verfahren aus dem Stand der Technik.

Mit der vorliegenden Erfindung soll daher ein Werkzeug geschaffen werden, welches hilft zu beurteilen, ob bzw. unter welchen Umständen und mit welcher Wahrscheinlichkeit der Verbotstatbestand der Tötung erfüllt ist, so bspw. normiert in § 44 Abs. 1 Bundesnaturschutzgesetz (BNatSchG), wenn eine WEA neu gebaut oder repowert werden soll, und/oder welche Auswirkungen zu erwarten und/oder wie diese zu minimieren sind.

Insbesondere geht es bei der vorliegenden Erfindung um die Entwicklung eines objektiven, standardisieren und verlässlichen Prognosewerkzeugs, welches im Kontext der Windenergieplanung (Genehmigungsverfahren) oder anderen anthropogenen Bauvorhaben (bspw. Elektrizitäts-Freileitungen) rechtssicher verwendet werden kann. Ziel ist dabei insbesondere, zu jeder projektspezifischen Konstellation (Koordinaten und Dimensionen der anthropogenen Struktur, Habitatumgebung, Koordinaten eines Bezugspunktes (z. B. der Brutplatz eines des Rotmilans)) berechnen zu können, wie hoch eine zu erwartendes Meide-, Attraktions- und/oder Kollisionswahrscheinlichkeit an der betrachteten Struktur ist, z.B. pro Brutsaison und Brutvogelindividuum von in einem relevanten Umkreis um die Struktur ansiedelndem Brutvogel.

Diese Aufgabe wird erfindungsgemäß gelöst durch ein computerimplementiertes Verfahren zur Bestimmung einer Kollisionswahrscheinlichkeit von Tieren, insbesondere Fluglebewesen, insbesondere Vögeln und/oder Fledermäusen, mit einer anthropogenen Struktur, wie dem Rotor einer Windenergieanlage, einer Hochspannungsleitung, Fahrzeugen wie Autos oder Zügen, mit folgenden Handlungen:
- Bereitstellen digitaler zumindest zweidimensionaler Kartierungsdaten der Umgebung der anthropogenen Struktur, insbesondere einer Umgebung und/oder Umkreises von mindestens 1 km Radius und/oder halber Kantenlänge um die anthropogenen Struktur, die Informationen über Nutzungsarten der kartierten Flächen enthalten,
- Setzen eines für die zu betrachtende Tierart spezifischen Bezugspunkts in den digitalen zumindest zweidimensionalen Kartierungsdaten, der insbesondere ein gefundener und/oder möglicher Brut-, Rast- und/oder Futterplatz ist,
- Bestimmen eines in einem Aktivitätsradius um den Bezugspunkt herum liegenden Aktivitätsbereiches in den digitalen zumindest zweidimensionalen Kartierungsdaten, wobei der Aktivitätsradius entsprechend einer Maximalentfernung von dem Bezugspunkt bestimmt ist, innerhalb derer ein zu betrachtendes Tier, entsprechend seiner biologischen Art, ganz überwiegend aktiv ist,
- Auswählen eines innerhalb des Aktivitätsbereichs liegenden Standorts oder Verlauf der anthropogenen Struktur in den digitalen zumindest zweidimensionalen Kartierungsdaten,
- Aufteilen der digitalen zweidimensionalen Kartierungsdaten in dem Aktivitätsbereich in Kacheln mit einer, insbesondere vorgegebenen, Kantenlänge, insbesondere im Bereich von 1 bis 100 m, und Zuweisen eines Hemmniswertes zu jeder der Kacheln unter Berücksichtigung der, insbesondere anhand der, in dieser, um dieser und/oder zwischen dieser und dem Bezugspunkt vorherrschenden Nutzungsart und insbesondere auch der Entfernung zum Bezugsort,
- Bestimmen einer Aufenthalts-, insbesondere Überflugwahrscheinlichkeit, des Tiers für jede der Kacheln ausgehend von dem Bezugspunkt unter Berücksichtigung der Hemmniswerte und insbesondere auch der Entfernung der Kacheln zum Bezugspunkt und/oder von Umweltfaktoren der Kachel wie Landnutzung, Lautstärke, anthropogene Aktivität, Straßendichte und/oder Industriedichte,
- Bei Fluglebewesen weiter den Schritt aufweisend, dass für solche Kacheln, die einen Abstand zum Standort oder Verlauf der anthropogenen Struktur aufweisen, der kleiner oder gleich einem vorbestimmten Abstand, insbesondere im Bereich von 1 bis 1000 m, ist, über eine Höhe, die einer maximalen Flughöhe der Art des betrachteten Fluglebewesens entspricht, für jede Kachel in der Höhenrichtung aufeinanderfolgende Kuben bestimmt werden, insbesondere jeweils mit einer Höhenerstreckung im Bereich von 5 bis 50m,
- Bei Fluglebewesen weiter den Schritt aufweisend, dass anhand von arttypischen Flughöhenmustern und Ausweichverhalten vor der anthropogenen Struktur der zu betrachtenden Art der Fluglebewesen eine Durchflugswahrscheinlichkeiten für jeden der Kuben bestimmt wird,
- Bei Fluglebewesen weiter den Schritt aufweisend, dass für jeden Kubus über eine Korrelation der bestimmten Überflugwahrscheinlichkeit der Kachel, über der der jeweilige Kubus angeordnet ist, mit zu oberhalb dieser Kachel liegenden Kuben bestimmten Durchflugswahrscheinlichkeiten eine Aufenthaltswahrscheinlichkeit in dem jeweiligen Kubus bestimmt wird,
- Bei Fluglebewesen weiter den Schritt aufweisend, dass anthropogene Kuben unter den Kuben bestimmt werden, in denen ein Meide-, Attraktions- und/oder Risikobereich der anthropogenen Struktur und/oder in denen die anthropogenen Struktur liegt und/oder deren Mittelpunkt in den Nahbereich der betrachteten anthropogenen Struktur fällt, bestimmt und die diesen anthropogenen Kuben zugeordneten Aufenthaltswahrscheinlichkeiten addiert werden und basierend darauf die Meide-, Attraktions- und/oder Kollisionswahrscheinlichkeit bestimmt wird.
- Bei nicht fliegenden Tieren weiter den Schritt aufweisen, dass basierend auf den Hemmniswerten und insbesondere auch der Entfernung der Kacheln zum Bezugspunkt und/oder von Umweltfaktoren der Kachel wie Landnutzung, Lautstärke, anthropogene Aktivität, Straßendichte und/oder Industriedichte, Aufenthaltswahrscheinlichkeiten bestimmt werden und basierend darauf die Meide-, Attraktions- und/oder Kollisionswahrscheinlichkeit bestimmt wird.
- Mit besonderem Vorteil wird zur Bestimmung der Meide-, Attraktions- und/oder Kollisionswahrscheinlichkeit bei Flugtieren die relative Aufenthaltswahrscheinlichkeit in den anthropogenen Kuben bzw. bei nicht-Flugtieren die relative Aufenthaltswahrscheinlichkeit in den anthropogenen Kacheln, also den Kacheln, in denen ein Meide-, Attraktions- und/oder Risikobereich der anthropogenen Struktur und/oder in denen die anthropogenen Struktur liegt und/oder deren Mittelpunkt in den Nahbereich der betrachteten anthropogenen Struktur fällt, relativ zur Aufenthaltswahrscheinlichkeit außerhalb des Bezugspunktes und/oder zur Bestimmung der Meide-, Attraktions- und/oder Kollisionswahrscheinlichkeit die absolute Aufenthaltszeit in den anthropogenen Kuben oder Kacheln bestimmt, insbesondere mittels Multiplikation der arttypischen Aktivitätszeitdauer der Art mit der relativen Aufenthaltswahrscheinlichkeit in den anthropogenen Kuben oder Kacheln. Dabei ist die Aktivitätszeitdauer bei Fluglebewesen insbesondere die arttypische Flugzeitdauer in einem vorbestimmten Zeitintervall und bei nicht-Fluglebewesen insbesondere die arttypische Zeitdauer des Aufenthalts außerhalb des Bezugspunktes in einem vorbestimmten Zeitintervall. Das vorbestimmte Zeitintervall kann dabei z.B. eine Saison oder ein Jahr sein. Somit bestimmt sich dann die Meide-, Attraktions- und/oder Kollisionswahrscheinlichkeit z. B. pro Saison oder pro Jahr.

In anderen Worten ausgedrückt können sie auch lauten:
- Es werden digitale zumindest zweidimensionale Kartierungsdaten bereitgestellt, die Informationen über Nutzungsarten der kartierten Flächen enthalten. Dies können insbesondere Kartierungsdaten sein, die Informationen zu land- und forstwirtschaftlichen Flächen enthalten, z.B. Waldgebiete ausweisen oder auch Grünland bzw. Ackerland. Auch Gewässer können hier in den Kartierungsdaten ausgewiesen sein. Zudem können die Informationen in den Kartierungsdaten auch Informationen zu menschlichen Siedlungen (wie etwa Gehöfte, Industriestandorte oder Ortschaften) und zugehöriger Bebauung enthalten oder auch Informationen zu anderen Infrastruktureinrichtungen wie Straßen oder Bahntrassen.
- In den digitalen zweidimensionalen Kartierungsdaten wird ein für die zu betrachtende Art spezifischer Bezugspunkt gesetzt. Dies können insbesondere empirisch in der realen Landschaft ermittelte Bezugspunkte sein, wie insbesondere ein Brutplatz einer artenschutzrechtlich relevanten Brutvogelart, auf längere Dauer angelegte Schlaf- oder Rastplätze von artenschutzrechtlich relevanten Fluglebewesen, modellierte Brutwahrscheinlichkeiten oder dergleichen. Modellierte Brutwahrscheinlichkeiten können beispielsweise anhand von Umweltfaktoren wie natürliche geographischer Verteilung, klimatischen Bedingungen, Landnutzung, Lautstärke, anthropogene Aktivität, Straßendichte und/oder Industriedichte modelliert werden.
- In den digitalen zweidimensionalen Kartierungsdaten wird ein in einem Aktivitätsradius um den Bezugspunkt herum liegender Aktivitätsbereich bestimmt, wobei der Aktivitätsbereich insbesondere als Aktivitätsradius entsprechend einer Maximalentfernung von dem Bezugspunkt bestimmt ist, innerhalb derer ein zu betrachtendes Tier, insbesondere Fluglebewesen, entsprechend seiner biologischen Art, aktiv, insbesondere flugaktiv, ist. Es wird also ein solcher Bereich bestimmt, in dem ein zu betrachtendes Lebewesen um den Bezugspunkt herum aktiv ganz überwiegend anzutreffen erwartet werden kann, gemäß seiner arttypischen Bewegungsaktivität.
- In den digitalen zweidimensionalen Kartierungsdaten wird mindestens ein innerhalb des Aktivitätsbereichs liegender Standort oder Verlauf einer anthropogenen Struktur (z. B. einer Windenergieanlage, Straße, Hochspannungsleitung und/oder Bahntrasse) ausgewählt.
- Die digitalen zweidimensionalen Kartierungsdaten in dem Aktivitätsbereich werden in Kacheln mit einer vorgegebenen Kantenlänge aufgeteilt. Die Kantenlängen dieser Kacheln können z.B. zwischen 1 und 50 m liegen, können aber auch geringer sein, ggf. auch höhere Kantenlängen aufweisen, insbesondere wird eine einheitliche Kantenlänge pro Raumrichtung gewählt. Die Wahl der Kantenlänge kann anhand der vorhandenen Rechenleistung und der Kleinteiligkeit der Landnutzung innerhalb des Aktivitätsbereichs erfolgen. Je niedriger die Kantenlängen gewählt werden, desto höher ist die Auflösung, desto höher aber auch der Rechenaufwand für das Datenverarbeitungsgerät, den Computer, der das erfindungsgemäße Verfahren abarbeitet. Jeder der so erhaltenen Kacheln wird dann anhand der in dieser vorherrschenden Nutzungsart eine relative Nutzungsintensität zugewiesen, die u. a. (aber nicht ausschließlich - s. u. "Attraktivitätswerte für bestimmte Landschaften") einen Hemmniswert beinhaltet. Dieser Hemmniswert korreliert zu dem Verhalten des zu betrachtenden Fluglebewesens. Für eine Rotmilan, z.B., ist ein Waldgebiet wenig attraktiv für die Nahrungssuche, so dass er seine Flugrouten typischerweise so wählt, dass er auf seinem Weg zu offenen Flächen, wie Grasland oder anders landwirtschaftlich genutzte Flächen möglichst wenig Wald überfliegen muss. Denn diese Überflugstrecken kosten das Tier Energie, ohne einen wesentlichen Nutzen zu erbringen. Ähnlich kann es sich mit ausgedehnten Wasserflächen wie etwa großen Seen verhalten. Auch hier ist eine Hemmniswirkung der genannten Flächen oder Siedlungen, die für ein Fluglebewesen gleichermaßen einen Barrierecharakter haben können, entsprechend groß. Der Hemmniswert kann dabei insbesondere als ein Faktor angenommen werden, der für jede Kachel quantifiziert, mit welchem zusätzlichen Energieaufwand das Überfliegen der Kachel verbunden ist und somit in der gemeinsamen Betrachtung der Kacheln zwischen einem beliebigen Punkt und dem Bezugspunkt (wie Brutplatz) unterhalb einer (möglicherweise nichtlinearen) Verbindung zwischen diesen beiden Punkten eine Maß dafür ist, mit welchem Energieaufwand das Erreichen des Punktes verbunden ist. Auch andere Arten, einen Hemmniswert festzulegen, sind denkbar, z.B. ein Gewichtungsfaktor für eine Wahrscheinlichkeit, dass das betrachtete Fluglebewesen sich aus gehend von benachbarten Kacheln im Bereich der betreffenden Kachel aufhält.
- Jeder der Kacheln wird u. a. unter Berücksichtigung der Hemmniswerte eine Aufenthalts- oder Überquerungswahrscheinlichkeit, insbesondere Überflugwahrscheinlichkeit, des Lebewesens zugeordnet. Es wird also in der zweidimensionalen Betrachtung und ohne Berücksichtigung einer räumlichen Aufgliederung, also ohne eine Höhenverteilung, betrachtet, mit welcher Wahrscheinlichkeit das Fluglebewesen die jeweilige Kachel am Grund, in einer Betrachtung in lotrechter Projektion, passiert. Hierbei können zudem insbesondere Entfernungen der Strecken zum Bezugspunkt berücksichtigt werden, wobei eine Aufenthalts- oder Überquerungswahrscheinlichkeit, insbesondere Überflugwahrscheinlichkeit, typischerweise mit steigender Entfernung zum Bezugspunkt sinkt, da kürzere Flugstrecken energiesparender zu bewerkstelligen sind. Wenn Entfernungen berücksichtigt werden, können diese insbesondere als Polygonzüge von geraden Verbindungsstrecken der Mittelpunkte benachbarter Kacheln entlang einer betrachteten möglichen Flugstrecke bestimmt und berechnet werden. Es können zudem bei der Bestimmung der Passierwahrscheinlichkeit auch Attraktivitätswerte für bestimmte Landschaftsarten, also den einzelnen Kacheln zugeordnete Nutzungswerte mit einfließen, da ein Lebewesen weit häufiger solche Bereiche aufsuchen wird, die für das betreffende Tier attraktiv sind, z.B. weil dort ein vergleichsweise hohes Nahrungsangebot zu erwarten ist. Für einen Rotmilan wären dies z.B. Grünlandflächen.
- Über solchen Kacheln, die einen vorbestimmten Abstand ("3D-Abstand") zum Standort der anthropogenen Struktur (wie z. B. Windenergieanlage) aufweisen, der kleiner oder gleich einem vorbestimmten Abstand, insbesondere im Bereich von 10 Metern bis 10 km, insbesondere bis 1 km, ist, wird, bei Betrachtung von Fluglebewesen, eine explizit in der Höhe unterteilte Betrachtung unternommen. Hierzu werden über den Kacheln eines Umfeldes mit dem vorbestimmten Abstand um den Standort der anthropogenen Struktur (z. B. Nabe der Windenergieanlage oder mittlerer/approximierter Verlauf der Freileitungsstränge) über eine Höhe, bis zu einer maximalen Flughöhe der Art des betrachteten Fluglebewesens entspricht, für jede Kachel in der Höhenrichtung aufeinanderfolgende Kuben bestimmt. Es werden hier also gleichermaßen Raumpixel gebildet. Diese Kuben können Kantenlängen aufweisen, die der Kantenlänge der Kacheln entspricht. Sie können aber auch andere Kantenlängen haben. Bspw. kann hier eine Auflösung mit Kuben von 10 m oder 50 m Kantenlänge gewählt werden. Auch wenn bevorzugt ist, dass die Kuben tatsächlich kubisch, also würfelförmig ausfallen mit einheitlicher Kantenlänge, müssen diese Kuben im Sinne der Erfindung nicht zwingend würfelförmig gewählt werden, sondern können auch Quader mit unterschiedlichen Kantenlängen sein. Ähnliches gilt für die Kacheln, die zwar bevorzugt quadratisch, also mit gleicher Kantenlänge, gebildet sind, die aber ebenso gut auch rechteckig, also mit unterschiedlich gewählten Kantenlängen gebildet sein können. Der vorbestimmte Abstand wird dabei typischerweise so gewählt, dass innerhalb eines diesen Abstand unterschreitenden Bereichs mit einer Verhaltensreaktion des Fluglebewesens auf die anthropogene Struktur (wie Windenergieanlage) zu rechnen ist. So zeigen viele Fluglebewesen typischerweise ein Ausweich- oder Attraktionsverhalten gegenüber anthropogenen Strukturen, das dann ein von typischen Verhaltensmustern in Bereichen ohne solche Strukturen abweichendes Flugverhalten aufzeigt. Ein solcher vorbestimmter Abstand kann z.B. bei einer WEA etwa dem ein- bis 20fachen, beispielsweise siebenfachen, des Rotorradius der betroffenen Windenergieanlage betragen.
- Für die so erhaltenen Kuben wird anhand von arttypischen Flugmustern der zu betrachtenden Art der Fluglebewesen eine Durchflugswahrscheinlichkeiten für jeden der Kuben bestimmt. Hierbei werden insbesondere auch Verhaltensanpassungen aufgrund von Ausweichverhalten der Fluglebewesen gegenüber der anthropogenen Strukturen (wie Windenergieanlagen) berücksichtigt, wie sie empirisch in Beobachtungen festgestellt worden sind, aber auch art(gruppen)typische Höhenverteilungen.
- Über eine Korrelation der zu einer Kachel bestimmten Überflugwahrscheinlichkeit mit der zu den oberhalb dieser Kachel jeweils bestimmten Kuben zugeordneten Durchflugswahrscheinlichkeiten wird eine Aufenthaltswahrscheinlichkeit in dem jeweiligen Kubus bestimmt.
- Schließlich werden die dem potenziellen Meide-, Attraktions- und/oder Kollisionsrisikobereich der anthropogenen Struktur (z. B. dem Rotor der Windenergieanlage überstrichenen) zuordbaren Kuben bestimmt und werden die diesen Kuben wiederum zugeordneten Aufenthaltswahrscheinlichkeiten zu einer Aufenthaltswahrscheinlichkeit im Meide-, Attraktions- und/oder Risikobereich addiert und insbesondere über die Verschneidung (insbesondere Multiplikation) mit weiteren Faktoren (z. B. zeitliche/phänologische Aspekte der täglichen und saisonalen Flugdauer (s. u.) und/oder mechanistisch-probabilistische Betrachtungen von u. U. beweglichen kollisionsgefährdeten Strukturen) eine Meide-, Attraktions- und/oder Kollisionswahrscheinlichkeit berechnet.
- Im Falle der Betrachtung von Kollisionswahrscheinlichkeiten an WEA ist der von dem Rotor der Windenergieanlage überstrichene Bereich typischerweise sphärisch geformt, da einerseits der Rotor um seine horizontal gelegene Drehachse rotiert, andererseits die Gondel, an der der Rotor gelagert ist, um eine Vertikalachse verschwenken kann. Mittels eines geometrisch hergeleiteten Gewichtungsfaktors kann z. B. der Tatsache Rechnung getragen werden, dass der von den Rotorblättern überstrichene Luftraum (approximativ ein Zylinder) nur einen geringen Teil des o. g. sphärischen Volumens einnimmt. Dabei sind vorteilhafterweise die jeweiligen technischen Werte der Windenergieanlagen (oder anderen anthropogenen Strukturen), die zur Aufstellung geplant ist, natürlich zu berücksichtigen.

Das erfindungsgemäße Verfahren erlaubt eine sehr gute theoretische Abschätzung von Meide-, Attraktions- und/oder Kollisionswahrscheinlichkeiten bzw. -risiken für Tiere mit anthropogenen Strukturen (wie Windenergieanlagen) die im Bereich ihres jeweiligen Biotopumfeldes geplant bzw. errichtet werden. Dabei basiert diese Methode auf empirisch erhobenen Daten und Werten, die für die betrachteten Tiere, insbesondere Fluglebewesen art- und verhaltenstypisch sind, und kann basierend auf diesen Daten mit den angeführten Schritten und Annahmen eine Meide-, Attraktions- und/oder Kollisionswahrscheinlichkeit für einen theoretisch betrachteten Fall ableiten. Dabei wird insbesondere dadurch, dass eine Höhenauflösung des theoretisch zu durchfliegenden Raums nur innerhalb eines Radius in der Größe des vorbestimmten Abstandes um den Standort der anthropogenen Struktur herum vorgenommen wird, der für die Berechnung der Wahrscheinlichkeit benötigte Rechenaufwand erheblich reduziert. Für die weiter entfernt liegenden Bereiche wird vereinfachend die Höhenverteilung der Wahrscheinlichkeit der Passage als zu 1 addierend angenommen.

Insbesondere kann also bei dem erfindungsgemäßen Verfahren für solche Kacheln, die einen Abstand zum Standort der Windenergieanlage aufweisen, der größer als der vorbestimmte Abstand ist, die Überflugwahrscheinlichkeit als eine Summe von Durchflugwahrscheinlichkeiten in den über den Kacheln liegenden Höhenbereichen gewertet werden, in dem die Durchflugwahrscheinlichkeit insgesamt mit "1", insbesondere multipliziert mit dem Hemmniswert der Kachel, gleichgesetzt wird. Weiterhin kann bei dem Verfahren zusätzlich eine Zeitkomponente berücksichtigt werden, indem unter Berücksichtigung von für das Lebewesen empirisch ermittelten Aktivitäten mit Zeitwerten innerhalb eines bestimmten Zeitintervalls die Meide-, Attraktions- und/oder Kollisionswahrscheinlichkeit bezogen auf das gegebene Zeitintervall bestimmt wird. Es wird hier also der Gesamt-Aktivitätsbereich des Tiers mit seinen relativen Aufenthaltswahrscheinlichkeiten betrachtet und dazu die Zeitanteile berücksichtigt, in dem das Tier überhaupt aktiv ist. Hier kann z.B. eine Tagesbetrachtung stattfinden, eine Betrachtung bezogen auf ein Jahr, oder aber auch - bei nur saisonal dem Standort um den Bezugspunkt treuen Lebewesen, wie etwa Brutvögeln zur Brut- und Aufzuchtzeit um den Brutplatz herum oder saisonal auftretende Rast- oder Durchzugindividuen, eine Betrachtung bezogen auf die relevante Saison.

Diese Berücksichtigung auch des zeitlichen Aspekts gibt eine noch genauere Abschätzung der Meide-, Attraktions- und/oder Kollisionsrisiken, kann insbesondere auch ermöglichen, saisonal unterschiedliche Betriebsbedingungen oder -einschränkungen der anthropogenen Struktur (wie z. B. Windenergieanlage) mit in die Betrachtungen einfließen zu lassen.

Nachfolgend wird eine mögliche Umsetzung des Verfahrens näher dargelegt. Dabei beziehen sich alle folgenden Ausführungen exemplarisch auf den Rotmilan und eine Windenergieanlage, gelten aber i. d. R. analog für alle 15 im BNatSchG genannten, kollisionsgefährdeten Brutvogelarten oder auch andere Arten von Lebewesen und/oder anthropogene Strukturen. Das Verfahren kann entsprechend durch Heranziehen von für jeweils andere Arten typischen Verhaltensdaten und darauf basierend adaptierten Hemmniswerten, Flughöhenverteilungen usw. angepasst werden. Für die Vorhersagen der habitatabhängigen Landnutzung und Flughöhenverteilung brütender Rotmilane wurden in dem Ausführungsbeispiel des Verfahrens und dem dabei angewandten Modell Kartierungsdaten aus drei verschiedenen Datenquellen zur Landnutzung verwendet. In allen Fällen wurde das Koordinatensystem EPSG:3035 (auch mit "ETRS89 / LAEA Europe" bezeichnet) mit dessen Ursprung bei 0,0 als Ausgangsbasis verwendet. Alle Raster waren grundsätzlich am Ursprung (0, 0) ausgerichtet, die Zellmittelpunkte entsprechend versetzt. Bei einer 20-m-Auflösung wäre z. B. (10, 10) ein Mittelpunkt; allgemein: (10 + 20*i, 10 +20*j), i, j aus 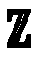 **;** weiter verallgemeinerbar für beliebige Auflösung.

Die drei hier verwendeten Quellen für die Kartierungsdaten mit Informationen zur Landnutzung waren die folgenden:
a. Daten des **Copernicus Corine Land Cover** (CLC)-Projektes aus dem jeweils zuletzt veröffentlichten Jahr, aktuell 2018 (http://gdz.bkg.bund.de/index.php/default/wfs-corine-land-cover-5-ha-stand-2018-wfs-clc5-2018.html).
   Basierend auf diesem Vektordatensatz, der im deutschen Corine berücksichtigten Strukturen ab 5 ha, wurde ein Rasterdatensatz mit Kacheln von 20 x 20 m Kantenlänge generiert. Sofern der Mittelpunkt der Kacheln den beschriebenen Landnutzungstyp aufweist, wurde diese diesbezüglich auf Wert "1" gesetzt, anderenfalls auf "0".
b. Daten aus dem **Copernicus High-Resolution Layer** (HRL)-Projekt (https://land.copernicus.eu/en/products?tab = explore).
   Diese liefern detaillierte Informationen über die Landbedeckung und -nutzung, mit einer örtlichen Auflösung von 5 m für kleine Gehölze ("Small Woody Features", SWF), sowie 10 m für Grasland ("Grassland"), Baumbestandsichte ("Tree Cover Density", TCD) und Versiegelung ("Imperviousness"). SWF ist beim originalen Download als multikategorielle Variable angesetzt, wobei im Folgenden die Kategorien "1" und "3" in die neue Kategorie "1" überführt werden und alle anderen Kategorien in den Wert "0" erhalten. Auch die "Grassland"-Variable ist im HRL-Layer kategoriell angegeben, wobei die Kategorie als "Grassland" mit dem Wert "1" gleichgesetzt wird und für alle anderen Fälle "0" angesetzt wird. "HRL Imperviousness" und "TCD" beschreiben den Anteil des Landnutzungstyps an der jeweiligen Zelle mit Werten zwischen 0 und 100 als Prozentangabe und wurden auch als solche verwendet. Alle vier HRL-Datensätze werden im Rasterformat zur Verfügung gestellt. "SWF" ist in kleineren Teilen ("tiles") herunterzuladen und für ein Projektgebiet, bei dem mehrere Teile benötigt werden, sind diese in der Datenaufbereitung zusammenzufügen ("merge").
c. Daten zu anthropogener Infrastruktur (Straßen ("roads"), Landesstraßen ("secondary")) wurden aus dem **OpenStreetMap** (OSM - https://www.openstreetmap.de/)-Projekt abgeleitet.

Diese liegen dort als Linien vor. Basierend auf einem 5 x 5 m Raster wurde dann analysiert, ob die jeweilige Kachel mit 5 x 5 m Auflösung von der Linie geschnitten wird (wobei der Kachel dann der Wert "1" zugewiesen wird, sie anderenfalls dem Wert "0" erhält).

Aus den oben genannten Quellen wurden dann wiederum weitere Variablen abgeleitet, die für die Prognose der Raumnutzung des Rotmilans genutzt werden. Hierbei wurden drei verschiedene Kategorien von abgeleiteten Variablen zu unterscheiden:
***Dichten.*** Für Dichten wird bei der Berechnung des Habitatanteils nach Umkreis von 100, 500, 1.000, 2.500 sowie 5.000 Metern differenziert. Dabei wird für eine Abstandsbestimmung vom Mittelpunkt der zu beurteilenden Kachel ausgehend der jeweilige Radius angewendet und es wird der Mittelwert über die Variablenwerte aller Kacheln gebildet, deren Mittelpunkt innerhalb dieses Radius liegt. Ein Spezialfall ist die mit "0000 m" angegebenen Dichte (im Rahmen der hier erläuterten Ausführung der Erfindung nur für den Parameter "Grassland" relevant), welcher sich auf den Anteil in einem 200 x 200 m Raster selbst bezieht (also nicht auf Kreisflächen mit Radius um den Kachelmittelpunkt, der über die zu beurteilende Kachel hinausgeht).

***Distanzen.*** Für die Berechnung von Distanzen wird die Distanz des Mittelpunkts jeder Kachel zum nächstgelegenen Mittelpunkt einer Kachel mit der Ausprägung des jeweiligen Landnutzungsparameters berechnet. Bei Landnutzungsparametern, denen eine prozentuale und keine kategorielle Variable zugrunde lag (vgl. Copernicus HRL), wird zuvor bei einem Mindestanteil von 0,1 % der Wert "1" angesetzt, Kacheln mit geringerem Anteil des Landnutzungstyps wird der Wert "0" zugeordnet. Entspricht die beurteilte Kachel selbst dem betrachteten Landnutzungstyp, wird anstelle der Distanz zu diesem Landnutzungstyp die kürzeste Distanz zu dem Mittelpunkt einer Kachel ohne diesen Landnutzungstyp berechnet und als negativer Wert ausgegeben. Die maximal zulässigen Distanzen ausgehend von einem als Bezugspunkt gewählten Horststandort des Vogels, der im Rahmen einer Feldbeobachtung ermittelt worden war, sind 10 km bzw. -10 km.

Als adaptierte Ausprägung der Distanz wurde die Distanz zu Waldflächen mit einer Mindestgröße von 3 ha generiert. Anstelle des für die reine Distanzberechnung angesetzten Mindestanteils von 0,1 % wird für die Distanzberechnung zu Waldflächen größer 3 ha ein Mindestanteil von 25 % an Wald (entsprechend TCD) gefordert, bei denen den entsprechenden Zellen der Wert "1" zugeordnet wird (und ein geringerer Anteil mit "0" angesetzt wird). Ergibt sich auf Ebene der 100 x 100-m-Auflösung dann eine zusammenhängende Fläche von weniger als 3 ha für die Kategorie "1", so wird diese anschließend ebenfalls auf "0" gesetzt. Anschließend wird wie oben beschrieben die Distanz berechnet.

***Cost Distanzen ("Barriereeffekt")*.** Die "costDist_tree" ist ein eigener Parameter und bildet vorteilhafterweise den Hemmniswert bezogen auf Waldflächen ab. Er wird methodisch unterschiedlich zu den zuvor beschriebenen Distanzen berechnet. Während andere Parameter (Dichten, Distanzen) stets eine Kachel anhand der dortigen (bzw. umgebenden) Habitatstruktur bewerten, zielt die Cost Distanz darauf ab, den Weg vom Horst bis zu der zu bewertenden Kachel auf dessen Überflugeignung für brütende Rotmilane zu bewerten. Der Rotmilan benötigt Offenland bei der Nahrungssuche und es ist für ihn daher nicht energieeffizient, wenn er bei der Nahrungssuche weitere Strecken über Waldflächen fliegen muss, bevor er Offenland erreicht.

Die Variable "costDist_tree" beschreibt den Barriereeffekt von Wald als zusätzlich erforderliche "Kosten" ähnlich dem zusätzlichen Zeitbedarf, der von einem Navigationsgerät im Auto für einen Stau ausgegeben wird. Wald wird für diese Anwendung insbesondere mit doppelten "Kosten" belegt (ein Wert der heuristisch bestimmt wurde). Die Berechnung erfolgt dabei stets ausgehend vom Brutplatz und separat für jede 20 x 20 m Kachel als Zielkachel im 10 km Bereich (als Quadrat mit 20 km Seitenlängen oder einem angenäherten Kreis mit dem Radius 10 km) um den Brutplatz: einmal ohne Berücksichtigung von Waldflächen (jeder Kachel wird somit der "Kostenwert" 1 zugewiesen) und einmal mit doppelten Kosten ("Kostenwert" 2) für das Überfliegen von Waldflächen verglichen zu nicht-Waldflächen (die den Wert "1" zugewiesen bekommen). Für den letztgenannten Fall ("1" und "2"-Werte) wird dann mittels Minimierungsalgorithmus derjenige (oft nichtlineare) Pfad zwischen Bezugspunkt und Zielkachel identifiziert, der die geringste Summe an Kostenwerten über diejenigen Kacheln hat, die den Pfad schneiden. Zwischen dieser Summe (die somit Abstrakt als Wert eines minimierten Energiefunktionals aufgefasst werden kann) und der Summe von "1"-Werten über diejenigen Kacheln, die die direkte Verbindung zwischen Bezugspunkt und Zielkachel schneiden, wird dann die Differenz gebildet, welche den Variablenwert "costDist_tree" für die entsprechende Zielzelle definiert. Befindet sich kein Wald zwischen Bezugspunkt und Zielzelle, ist das Ergebnis als immer "0", und je mehr (und größer) die Wälder sind, die die direkte Verbindungslinie schneiden, desto größer ist der "costDist_tree"-Wert. Maximal entspricht der Wert dieser Variable also der Summe der Werte 2-1 = 1 aller Kacheln entlang einer linearen Verbindung zwischen Bezugspunkt und Zielkachel, ergo der Anzahl an Kacheln zwischen Bezugspunkt und Zielkachel (wenn sich auf der gesamten Verbindungsgerade Wald befindet).

Entsprechend der Rasterstruktur sind, um den kostengünstigsten Weg vom Brutplatz zur Zielkachel zu bestimmen, ausschließlich Bewegungen zu der jeweiligen Nachbarkachel zulässig, wobei die Kosten für jede einzelne Bewegung des Vogels anhand der Distanz vom Mittelpunkt der Ausgangskachel zum Mittelpunkt der Zielkachel angesetzt werden. Die Berechnung erfolgt dabei schrittweise, so ist die Zielkachel jeweils die nächste Kachel im Bewegungsablauf des Vogels. Am Weg von A nach D ergeben sich die Kosten demnach als Summe der Kosten von A nach B, B nach C und C nach D. Bei der Berechnung unter Berücksichtigung von Wald bestimmen sich die "Kosten" je zur Hälfte aus dem Wald-Anteil der Start- und Zielkachel. Durch den Ansatz, dass von jedem Punkt nur 8 mögliche Bewegungen zulässig sind, wodurch die Rechenzeit deutlich verringert wird, ergeben sich geringe Abweichungen von der euklidischen Distanz. Dieser Effekt wird jedoch dadurch berücksichtigt, dass lediglich die zusätzlichen Kosten angesetzt werden, die sich aus den methodisch vergleichbaren Berechnungen mit und ohne höhere Kosten für Wald ergeben.

Es wurde dann ein Flughöhenmodell wie folgt angewandt: Als Basis diente die relative Raumnutzung bezogen auf einen Überflug der jeweiligen Kacheln, also die Überflugwahrscheinlichkeit. Diese beschreibt eine 2D-Landnutzung der brütenden Rotmilane im Überflug und setzt sich aus (1) dem oben beschriebenen Hemmniswert, (2) einer (im Vorfeld empirisch und artspezifisch quantifizierte) Überflugwahrscheinlichkeit in Abhängigkeit von der Distanz zum Bezugspunkt (wie Brutplatz) in Form von distanzabhängigen Poygonzügen, und (3) einer weiteren Aufenthaltswahrscheinlichkeitsdichte zusammen, die die generellen (im Vorfeld empirisch quantifizierten) Landnutzungspräferenzen der entsprechen Art repräsentiert. Diese drei Aspekte definieren in Kombination die o. g. 2D-Landnutzung.

Für das Flughöhenmodell werden nun in einem ersten Schritt die Vorhersagen der 2D-Landnutzung so skaliert, dass der maximale Wert bei 1 liegt. Dieser Schritt hat dabei keinen rechnerischen Einfluss auf die final geschätzten Kollisionsrisiken, sondern dient primär der Anschaulichkeit bzw. besseren Interpretierbarkeit bei Weiterverwendung der prognostizierten Landnutzung, z.B. im Kontext einer Raumnutzungsanalyse (RNA).

In einem Radius um den WEA-Nabenmittelpunkt herum, der dem Siebenfachen des Rotorradius der WEA entspricht, wird über den Kacheln eine Höhenaufteilung in Kuben von 10 x 10 x 10 m Kantenlänge unternommen. Die Höhenaufteilung erfolgt nur in dem genannten Radius (vorbestimmter Abstand/"3D-Abstand") um den Standort der WEA-Nabe, um so die für die computergestützte Ermittlung der Kollisionswahrscheinlichkeit benötigte Rechenzeit deutlich zu verkürzen ohne die Aussagekraft der Ergebnis entsprechend stark zu beeinflussen. Diese Vereinfachung kann insbesondere deshalb so erfolgen, da sich nur die Flughöhenverteilung im Umfeld der spezifischen betrachteten WEA auf das berechnete Kollisionsrisiko auswirkt, nicht aber die Flughöhenverteilung im restlichen Homerange des Rotmilans.

Die Aufteilung in Kuben erfolgte dabei bis zu einer Höhe von maximal 300 m, da diese Höhe als maximal anzunehmende Flughöhe eines Rotmilans angenommen werden kann. Für diese Kuben wird, unter Rückgriff auf für die jeweils den Kacheln zugeordnete Landnutzung sowie bekannter (empirisch ermittelter) Flughöhenverteilungen sowie bekanntem (empirisch ermitteltem) WEA-Ausweichverhalten eine Durchflugwahrscheinlichkeit ermittelt. Für Kacheln außerhalb der in Kuben unterteilten Zonen wird eine aufsummierte Durchflugwahrscheinlichkeit von 1 angenommen.

So wird für jede der Kacheln eine höhenabhängige Aufenthaltswahrscheinlichkeit fliegender Rotmilan-Brutvögel erhalten, wobei diese nur in dem Umkreis um den Standort der WEA tatsächlich höhenaufgelöst bestimmt wird. Dieser Trick einer nur partiellen 3D-Betrachtung führt dazu, dass deutlich weniger Datensätze (in diesem Beispiel reduziert um einen Faktor von knapp 30) rechnerisch betrachtet werden müssen, als wenn ein insgesamt in 3D aufgelöster 10 km Homerange betrachtet werden würde, was die Rechenzeit deutlich verkürzt aber letztlich identische Ergebnisse liefert.

Es resultiert also ein Datensatz mit prognostizierter relativer 2D-Raumnutzung (Habitat- und Brutplatzeffekte), gegeben 10 km um den Brutplatz (mit einer Auflösung in Kacheln von in diesem Beispiel 10 x 10 m am Boden), sowie der einer Höhenwahrscheinlichkeit, welche sich für jede 2D-Kachel über alle dort verfügbaren Höhenangaben zu 1 aufsummiert, wobei nur im Umfeld von 7 Rotorradien um die betrachtete WEA die Höhennutzung explizit (in 10 m-Schritten) aufgelöst wird und nur über diesem explizit in 3D aufgelösten Bereich die über einzelnen Kacheln aufsummierten Höhenangaben/-wahrscheinlichkeiten aufgrund des WEA-Ausweichverhaltens unter 1 liegen können.

Diese Aufenthaltswahrscheinlichkeit in den Kuben wird nun für diejenigen Kuben, die von dem Rotor der betrachteten WEA überstrichen werden können, aufsummiert.

Weiterhin kann eine zeitliche Betrachtung vorgenommen werden, um die finalen Kollisionswahrscheinlichkeiten aus diesen aufsummierten Aufenthaltswahrscheinlichkeiten berechnen zu können:
Für die Prognose der Aufenthaltssekunden im WEA-Risikobereich pro Saison wird in einem ersten Schritt der relative Anteil der Aufenthaltswahrscheinlichkeit im WEA-Risikobereich pro Saison quantifiziert, indem die o.g. summierten Aufenthaltswahrscheinlichkeiten im Risikobereich durch die Summe der Aufenthaltswahrscheinlichkeiten im Gesamten "Homerange" (rechnerisch betrachtet: 10 km -Radius um den Brutplatz und 300 m Höhe) geteilt wird. Das resultierende Maß wird dann mit den arttypischen Zeiten, die ein Rotmilan fliegend in der Luft verbringt, mit der Dauer einer Brutsaison skaliert, um die Aufenthaltssekunden im WEA Risikobereich (also der Sphäre, die vom Rotor der WEA überstrichen werden kann) zu bestimmen. Über Multiplikation mit einem geometrisch hergeleiteten Faktor kann dann die prognostizierte Anzahl an Aufenthaltssekunden pro Brutsaison und Individuum im Risikobereich der WEA berechnet werden, woraus dann finale Kollisionsrisiken bestimmt werden können.

Wird zudem ein von den Windverhältnissen abhängiges Flugverhalten der Vögel berücksichtigt, so kann eine zu den jeweiligen Windgeschwindigkeiten korrelierende Nutzungssituation des Luftraumes auf Höhe des WEA-Risikobereichs mitberücksichtigt und die Kollisionswahrscheinlichkeit noch weitergehend differenziert analysiert werden. Es können hier dann z.B. auch für solche Bedingungen und Situationen mit erhöhter Kollisionsgefahr sinnvolle Abschaltregelungen für spezifische WEA-Konstellationen abgeleitet werden.

## Patentansprüche

1. Computerimplementiertes Verfahren zur Bestimmung einer Meide-, Attraktions- und/oder Kollisionswahrscheinlichkeit mindestens einer Art von Fluglebewesen, insbesondere Vögeln und/oder Fledermäusen, mit einer anthropogenen Struktur, insbesondere dem Rotor einer Windenergieanlage, wobei
• digitale zumindest zweidimensionale Kartierungsdaten der Umgebung der anthropogenen Struktur, insbesondere einer Umgebung und/oder eines Umkreises von mindestens 1 km Radius und/oder halber Kantenlänge einer rechteckigen Umgebung um die anthropogene Struktur, bereitgestellt werden, die Informationen über Nutzungsarten der kartierten Flächen enthalten,
• in den digitalen zumindest zweidimensionalen Kartierungsdaten ein für die zu betrachtende Art der Fluglebewesen spezifischer Bezugspunkt, der insbesondere ein gefundener und/oder möglicher Brut-, Rast- und/oder Futterplatz ist, gesetzt wird,
• in den digitalen zumindest zweidimensionalen Kartierungsdaten ein in einem Aktivitätsradius um den Bezugspunkt herum liegender Aktivitätsbereich bestimmt wird, wobei der Aktivitätsradius entsprechend einer Maximalentfernung von dem Bezugspunkt bestimmt ist, innerhalb derer die Art der Fluglebewesen flugaktiv ist,
• in den digitalen zumindest zweidimensionalen Kartierungsdaten ein innerhalb des Aktivitätsbereichs liegender Standort oder Verlauf der anthropogenen Struktur ausgewählt wird,
• die digitalen zumindest zweidimensionalen Kartierungsdaten in dem Aktivitätsbereich in Kacheln mit einer, insbesondere vorgegebenen, Kantenlänge, insbesondere im Bereich von 1 bis 100 m, aufgeteilt werden und jeder der Kacheln unter Berücksichtigung der, insbesondere anhand der, in dieser und/oder zwischen dieser und dem Bezugspunkt vorherrschenden Nutzungsart und insbesondere auch der Entfernung zum Bezugsort, ein Hemmniswert zugewiesen wird,
• für jede der Kacheln ausgehend von dem Bezugspunkt unter Berücksichtigung der Hemmniswerte und insbesondere auch der Entfernung zum Bezugsort eine Überflugwahrscheinlichkeit durch Fluglebewesen der Art von Fluglebewesen bestimmt wird,
• für solche Kacheln, die einen Abstand zum Standort oder Verlauf der anthropogenen Struktur aufweisen, der kleiner oder gleich einem vorbestimmten Abstand, insbesondere im Bereich von 1 bis 1000 m, ist, über eine Höhe, die einer maximalen Flughöhe der Art des betrachteten Fluglebewesens entspricht, für jede Kachel in der Höhenrichtung aufeinanderfolgende Kuben bestimmt werden, insbesondere jeweils mit einer Höhenerstreckung im Bereich von 5 bis 50 m,
• anhand von arttypischen Flughöhenmustern und insbesondere auch anhand von Ausweichverhalten vor der anthropogenen Struktur, der Art der Fluglebewesen eine Durchflugswahrscheinlichkeiten für jeden der Kuben bestimmt wird,
• für jeden Kubus über eine Korrelation, insbesondere Multiplikation, der bestimmten Überflugwahrscheinlichkeit der Kachel, über der der jeweilige Kubus angeordnet ist, mit zu oberhalb dieser Kachel liegenden Kuben bestimmten Durchflugswahrscheinlichkeiten eine Aufenthaltswahrscheinlichkeit in dem jeweiligen Kubus bestimmt wird,
• anthropogene Kuben unter den Kuben bestimmt werden, in denen ein Meide-, Attraktions- und/oder Risikobereich der anthropogenen Struktur und/oder in denen die anthropogenen Struktur liegt, bestimmt und die diesen anthropogenen Kuben zugeordneten Aufenthaltswahrscheinlichkeiten addiert werden und darauf basierend die Meide-, Attraktions- und/oder Kollisionswahrscheinlichkeit bestimmt wird.

2. Verfahren nach Anspruch 1, **dadurch gekennzeichnet, dass** für solche Kacheln, die einen Abstand zum Standort der anthropogenen Struktur aufweisen, der größer als der vorbestimmte Abstand ist, die Überflugwahrscheinlichkeit als eine Summe von Durchflugwahrscheinlichkeiten in den über den Kacheln liegenden Höhenbereichen gewertet wird, und/oder dass zusätzlich eine Zeitkomponente berücksichtigt wird, indem unter Berücksichtigung von für Flugaktivitäten von zu betrachtenden Fluglebewesen empirisch ermittelten Zeitwerten innerhalb eines bestimmten Zeitintervalls die Kollisionswahrscheinlichkeit bezogen auf ein gegebenes Zeitintervall bestimmt wird.

3. Verfahren nach einem der vorhergehenden Ansprüche, **dadurch gekennzeichnet, dass** bei der Bestimmung der jeweiligen Durchflugswahrscheinlichkeiten der in den bestimmten Höhenlagen oberhalb der in einem Abstand zum Standort der Windenergieanlage, der kleiner oder gleich dem vorbestimmten Abstand ist, befindlichen Kacheln liegenden Kuben empirische Werte für ein Ausweichs- oder Attraktionsverhalten berücksichtigt werden, das ein Fluglebewesen gegenüber einer anthropogener, insbesondere der anthropogenen Struktur, insbesondere Windenergieanlagen, aufzeigt.

4. Verfahren nach einem der vorhergehenden Ansprüche, **dadurch gekennzeichnet, dass** der Hemmniswert für jede Kachel einen relativen Energieverlust quantifiziert, den das Lebewesen zu verzeichnen hat, wenn es ausgehend vom Bezugspunkt bis zum Erreichen der Kachel Kacheln passiert oder umgehen muss, die insbesondere nicht oder nur schlecht zur Nahrungssuche geeignet sind.

5. Verfahren nach einem der vorhergehenden Ansprüche, **dadurch gekennzeichnet, dass** jeder der Kacheln anhand der o. g., vorherrschenden Nutzungsarten sowie dem Abstand zum Bezugspunkt eine generelle Aufenthaltswahrscheinlichkeit zugeordnet wird, die sich insbesondere nicht aus dem Hemmniswert ableitet und/oder keinen relativen Energieverlust repräsentiert und/oder die insbesondere eine Habitatpräferenz, insbesondere basierend auf Umweltfaktoren der Kachel wie Landnutzung, Lautstärke, anthropogene Aktivität, Straßendichte und/oder Industriedichte, repräsentiert.

6. Verfahren nach dem vorstehenden Anspruch, **dadurch gekennzeichnet, dass** die Aufenthalts- insbesondere Überflugwahrscheinlichkeit jeder der Kacheln unter Berücksichtigung sowohl des Hemmniswerts der Kachel als auch der generellen Aufenthaltswahrscheinlichkeit der jeweiligen Kachel bestimmt wird und/oder dass die Aufenthalts-, insbesondere Überflugwahrscheinlichkeit jeder der Kacheln unter Berücksichtigung sowohl des Hemmniswerts der Kachel als auch der Distanz zum Bezugspunkt und insbesondere weiterer Umweltfaktoren der Kachel wie Landnutzung, Lautstärke, anthropogene Aktivität, Straßendichte und/oder Industriedichte, bestimmt wird.

7. Verfahren nach einem der vorhergehenden Ansprüche, **dadurch gekennzeichnet, dass** die den anthropogenen Kuben und/oder den Kuben der betrachteten anthropogenen Struktur zugeordneten Aufenthaltswahrscheinlichkeiten zu Aufenthaltswahrscheinlichkeiten innerhalb der gesamten betrachteten Kacheln rechnerisch in Bezug und/oder mit weiteren zeitabhängigen Betrachtungen des Verhaltens der Art, insbesondere der Zeit, die das Lebewesen außerhalb des Bezugspunktes verbringt, verschnitten, insbesondere multipliziert, wird um die Meide-, Attraktions- und/oder Kollisionswahrscheinlichkeit zu berechnen.

8. Verfahren nach einem der vorstehenden Ansprüche, wobei zur Bestimmung der Meide-, Attraktions- und/oder Kollisionswahrscheinlichkeit die relative Aufenthaltswahrscheinlichkeit in den anthropogenen Kuben, relativ zur Aufenthaltswahrscheinlichkeit außerhalb des Bezugspunktes bestimmt wird und/oder wobei zur Bestimmung der Meide-, Attraktions- und/oder Kollisionswahrscheinlichkeit die absolute Aufenthaltszeit in den anthropogenen Kuben bestimmt wird, insbesondere mittels Multiplikation der arttypischen Aktivitätszeitdauer der Art mit der relativen Aufenthaltswahrscheinlichkeit in den anthropogenen Kuben.

9. Verfahren nach einem der vorhergehenden Ansprüche, **dadurch gekennzeichnet, dass** das Verfahren für eine anthropogene Struktur und insbesondere einen Standort und/oder einen Verlauf der anthropogenen Struktur, mehrfach für unterschiedliche, insbesondere eine Vielzahl und/oder ein Raster von Bezugspunkten und/oder mit einem Bezugspunkt pro Kachel durchgeführt wird, wobei insbesondere die selben Kacheln und/oder Kantenlängen verwendet werden und/oder jedem Bezugspunkt eine Bezugspunktwahrscheinlichkeit, insbesondere eine Futtersuch-, Rast- und/oder Brutwahrscheinlichkeit, zugeordnet ist und/oder wird, und/oder die für die Bezugspunkte jeweils bestimmten Wahrscheinlichkeiten, insbesondere Meide-, Attraktions- oder Kollisionswahrscheinlichkeiten, aufsummiert werden.

10. Verfahren nach einem der vorhergehenden Ansprüche, **dadurch gekennzeichnet, dass** das Verfahren für unterschiedliche Standorte oder Verläufe der anthropogenen Struktur durchgeführt wird, wobei insbesondere dieselben Kacheln und/oder Kantenlängen verwendet werden, und insbesondere die für die unterschiedlichen Standorte oder Verläufe der anthropogenen Struktur bestimmten Meide-, Attraktions- und/oder Kollisionswahrscheinlichkeiten verglichen werden.

11. Verfahren nach einem der vorstehenden Ansprüche, wobei die Informationen über Nutzungsarten Informationen über Vegetationstypen, insbesondere beinhaltend die Kategorien Grasland, Wald, Acker, und/oder über anthropogene Nutzung, insbesondere beinhaltend die Kategorien Siedlungen, Straßen, Versiegelung und/oder Informationen aus Copernicus Corine Land Cover, Copernicus High Resolution Layer und/oder OpenStreetMap beinhalten.

12. Verfahren nach einem der vorstehenden Ansprüche, wobei der berechnete Wert der absoluten Aufenthaltsdauer in den anthropogenen Kuben in eine Anzahl von Querungen der Struktur umgerechnet wird, indem empirisch ermittelte artspezifische Bewegungsgeschwindigkeiten und -trajektorien verwendet und ausgewertet werden.

## Claims

1. A computer-implemented method for determining the probability of avoidance, attraction and/or collision of at least one species of avians, in particular birds and/or bats, with an anthropogenic structure, in particular the rotor of a wind turbine, wherein
• digital mapping data of at least two dimensions relating to the vicinity of the anthropogenic structure, in particular an area and/or a perimeter of at least 1 km in radius and/or half the edge length of a rectangular area around the anthropogenic structure, is provided, which contains information on the types of use of the mapped areas,
• in the digital, at least two-dimensional mapping data, a reference point specific to the type of flying organism under consideration is set, which is, in particular, a known and/or potential breeding, resting and/or feeding site,
• an activity area lying within an activity radius around the reference point is determined in the digital, at least two-dimensional mapping data, wherein the activity radius is determined according to a maximum distance from the reference point within which the species of flying creatures is active in flight,
• in the digital, at least two-dimensional mapping data, a location or route of the anthropogenic structure lying within the activity area is selected,
• the digital, at least two-dimensional mapping data within the activity area is divided into tiles with an, in particular predetermined, edge length, in particular in the range of 1 to 100 m, and each of the tiles is assigned an obstruction value, taking into account the, in particular on the basis of the, type of use prevailing within this and/or between this and the reference point, and in particular also the distance to the reference point,
• for each of the tiles, starting from the reference point and taking into account the obstacle values and, in particular, the distance to the reference location, a probability of overflight by flying creatures of the type of flying creatures is determined,
• for those tiles which are at a distance from the location or path of the anthropogenic structure that is less than or equal to a predetermined distance, in particular in the range of 1 to 1000 m, cubes are defined for each tile in the vertical direction, one after the other, at a height corresponding to the maximum flight altitude of the species of flying creature under consideration, in particular each with a vertical extent in the range of 5 to 50 m,
• on the basis of species-typical flight altitude patterns and, in particular, also on the basis of avoidance behaviour in the presence of the anthropogenic structure, a probability of passage is determined for each of the cubes for the species of flying organism,
• for each cube, a probability of presence within the respective cube is determined via a correlation, in particular multiplication, of the determined probability of overflight of the tile over which the respective cube is located with the determined probabilities of passage through cubes situated above this tile,
• anthropogenic cubes are identified among the cubes in which an avoidance, attraction and/or risk zone of the anthropogenic structure is located and/or in which the anthropogenic structure itself is situated; the residence probabilities associated with these anthropogenic cubes are summed, and based on this, the avoidance, attraction and/or collision probability is determined.

2. The method according to claim 1, **characterised in that**, for tiles which are at a distance from the location of the anthropogenic structure that is greater than the predetermined distance, the overflight probability is evaluated as a sum of flight-through probabilities in the altitude ranges above the tiles, and/or that a time component is additionally taken into account by determining the collision probability relative to a given time interval, taking into account time values empirically determined for the flight activities of the flying organisms under consideration within a specific time interval.

3. A method according to one of the preceding claims, **characterised in that**, when determining the respective flight-through probabilities of the cubes situated at the specified altitudes above the tiles located at a distance from the wind turbine site that is less than or equal to the predetermined distance, empirical values are taken into account for avoidance or attraction behaviour exhibited by a flying organism in response to an anthropogenic structure, in particular wind turbines.

4. A method according to one of the preceding claims, **characterised in that** the obstacle value for each tile quantifies a relative energy loss that the creature incurs when, starting from the reference point until reaching the tile, it must pass through or bypass tiles which, in particular, are unsuitable or poorly suited for foraging.

5. A method according to any of the preceding claims, **characterised in that** each of the tiles is assigned a general probability of presence based on the aforementioned predominant land-use types and the distance from the reference point, which in particular is not derived from the barrier value and/or does not represent a relative energy loss and/or which in particular represents a habitat preference, based in particular on environmental factors of the tile such as land use, noise levels, anthropogenic activity, road density and/or industrial density.

6. A method according to the preceding claim, **characterised in that** the probability of presence- in particular the overflight probability - of each of the tiles is determined taking into account both the obstacle value of the tile and the general presence probability of the respective tile, and/or that the presence probability - in particular the overflight probability - of each of the tiles is determined taking into account both the obstacle value of the tile and the distance to the reference point, and in particular further environmental factors of the tile such as land use, noise levels, anthropogenic activity, road density and/or industrial density.

7. A method according to one of the preceding claims, **characterised in that** the presence probabilities associated with the anthropogenic cubes and/or the cubes of the Anthropogenic structure under consideration are mathematically interpolated with presence probabilities within the entire set of tiles under consideration, in relation to and/or in conjunction with further time-dependent considerations of the species' behaviour, in particular the time the organism spends outside the reference point, in particular multiplied, in order to calculate the avoidance, attraction and/or collision probability.

8. A method according to one of the preceding claims, wherein, to determine the avoidance, attraction and/or collision probability, the relative probability of presence in the anthropogenic cubes relative to the probability of presence outside the reference point, and/or wherein, to determine the avoidance, attraction and/or collision probability, the absolute time spent in the anthropogenic cubes is determined, in particular by multiplying the species-typical activity duration of the species by the relative probability of presence in the anthropogenic cubes.

9. A method according to any of the preceding claims, **characterised in that** the method is carried out for an anthropogenic structure, and in particular a location and/or a course of the anthropogenic structure, multiple times for different, in particular a plurality and/or a grid of reference points and/or with one reference point per tile, wherein in particular the same tiles and/or edge lengths are used and/or a reference point probability, in particular a foraging, resting and/or breeding probability, is and/or are assigned, and/or the probabilities determined for the reference points in each case, in particular avoidance, attraction or collision probabilities, are summed.

10. A method according to one of the preceding claims, **characterised in that** the method is carried out for different locations or courses of the anthropogenic structure, wherein, in particular, the same tiles and/or edge lengths are used, and, in particular, the avoidance, attraction and/or collision probabilities determined for the different locations or courses of the anthropogenic structure are compared.

11. A method according to any of the preceding claims, wherein the information on land-use types includes information on vegetation types, in particular comprising the categories grassland, forest, arable land, and/or on anthropogenic land-use, in particular comprising the categories settlements, roads, impervious surfaces and/or information from Copernicus CORINE Land Cover, Copernicus High Resolution Layer and/or OpenStreetMap.

12. A method according to any one of the preceding claims, wherein the calculated value of the absolute duration of stay within the anthropogenic cubes is converted into a number of crossings of the structure by using and evaluating empirically determined species-specific movement speeds and trajectories.

## Revendications

1. Procédé mis en œuvre par ordinateur pour déterminer la probabilité d'évitement, d'attraction et/ou de collision d'au moins une espèce d'aviaire, en particulier d'oiseaux et/ou de chauves-souris, avec une structure anthropique, en particulier le rotor d'une éolienne, dans lequel
• des données cartographiques numériques d'au moins deux dimensions relatives aux environs de la structure anthropique, en particulier une zone et/ou un périmètre d'au moins 1 km de rayon et/ou la moitié de la longueur d'un côté d'une zone rectangulaire autour de la structure anthropique, sont fournies, lesquelles contiennent des informations sur les types d'utilisation des zones cartographiées,
• dans les données cartographiques numériques au moins en deux dimensions, un point de référence spécifique au type d'organisme volant considéré est défini, qui est notamment un site de reproduction, de repos et/ou d'alimentation connu et/ou potentiel,
• une zone d'activité située dans un rayon d'activité autour du point de référence est déterminée dans les données cartographiques numériques, au moins en deux dimensions, le rayon d'activité étant déterminé en fonction d'une distance maximale par rapport au point de référence à l'intérieur de laquelle l'espèce d'insectes volants est active en vol,
• dans les données cartographiques numériques, au moins en deux dimensions, un emplacement ou un tracé de la structure anthropique situé dans la zone d'activité est sélectionné,
• les données cartographiques numériques, au moins en deux dimensions, situées dans la zone d'activité sont divisées en tuiles ayant une longueur de côté, en particulier prédéterminée, notamment comprise entre 1 et 100 m, et une valeur d'obstruction est attribuée à chacune des tuiles, en tenant compte du type d'utilisation prévalant au sein de celle-ci et/ou entre celle-ci et le point de référence, et notamment également de la distance par rapport au point de référence,
• pour chacune des tuiles, en partant du point de référence et en tenant compte des valeurs d'obstacle et, en particulier, de la distance par rapport à l'emplacement de référence, une probabilité de survol par des créatures volantes du type de créatures volantes est déterminée,
• pour les tuiles situées à une distance de l'emplacement ou du tracé de la structure anthropique inférieure ou égale à une distance prédéterminée, en particulier comprise entre 1 et 1 000 m, des cubes sont définis pour chaque tuile dans la direction verticale, les uns après les autres, à une hauteur correspondant à l'altitude de vol maximale de l'espèce de créature volante considérée, en particulier chacun ayant une étendue verticale comprise entre 5 et 50 m,
• sur la base des profils d'altitude de vol typiques de l'espèce et, en particulier, également sur la base du comportement d'évitement en présence de la structure anthropique, une probabilité de passage est déterminée pour chacun des cubes pour l'espèce d'organisme volant,
• pour chaque cube, une probabilité de présence à l'intérieur du cube concerné est déterminée par une corrélation, en particulier une multiplication, de la probabilité de survol déterminée de la tuile sur laquelle se trouve le cube concerné avec les probabilités de passage déterminées à travers les cubes situés au-dessus de cette tuile,
• les cubes anthropiques sont identifiés parmi les cubes dans lesquels se trouve une zone d'évitement, d'attraction et/ou de risque de la structure anthropique et/ou dans lesquels la structure anthropique elle-même est située ; les probabilités de présence associées à ces cubes anthropiques sont additionnées, et sur cette base, la probabilité d'évitement, d'attraction et/ou de collision est déterminée.

2. Procédé selon la revendication 1, **caractérisé en ce que**, pour les tuiles qui se trouvent à une distance de l'emplacement de la structure anthropique supérieure à la distance prédéterminée, la probabilité de survol est évaluée comme une somme des probabilités de traversée dans les plages d'altitude au-dessus des tuiles, et/ou qu'une composante temporelle est en outre prise en compte en déterminant la probabilité de collision par rapport à un intervalle de temps donné, en tenant compte de valeurs temporelles déterminées empiriquement pour les activités de vol des organismes volants considérés au cours d'un intervalle de temps spécifique.

3. Procédé selon l'une des revendications précédentes, **caractérisé en ce que**, lors de la détermination des probabilités de traversée respectives des cubes situés aux altitudes spécifiées au-dessus des tuiles situées à une distance du site de l'éolienne qui est inférieure ou égale à la distance prédéterminée, des valeurs empiriques sont prises en compte pour le comportement d'évitement ou d'attraction manifesté par un organisme volant en réponse à une structure anthropique, en particulier des éoliennes.

4. Procédé selon l'une des revendications précédentes, **caractérisé en ce que** la valeur d'obstacle pour chaque tuile quantifie une perte d'énergie relative que la créature subit lorsqu'elle doit, en partant du point de référence jusqu'à atteindre la tuile, traverser ou contourner des tuiles qui, en particulier, sont inadaptées ou peu adaptées à la recherche de nourriture.

5. Procédé selon l'une quelconque des revendications précédentes, **caractérisé en ce que** chacune des tuiles se voit attribuer une probabilité générale de présence fondée sur les types d'utilisation des sols prédominants susmentionnés et la distance par rapport au point de référence, laquelle, en particulier, n'est pas dérivée de la valeur de barrière et/ou ne représente pas une perte d'énergie relative et/ou représente en particulier une préférence d'habitat, fondée notamment sur des facteurs environnementaux de la tuile tels que l'utilisation des sols, les niveaux de bruit, l'activité anthropique, la densité routière et/ou la densité industrielle.

6. Procédé selon la revendication précédente, **caractérisé en ce que** la probabilité de présence
- en particulier la probabilité de survol - de chacune des tuiles est déterminée en tenant compte à la fois de la valeur d'obstacle de la tuile et de la probabilité de présence générale de la tuile respective, et/ou **en ce que** la probabilité de présence - en particulier la probabilité de survol - de chacune des tuiles est déterminée en tenant compte à la fois de la valeur d'obstacle de la tuile et de la distance par rapport au point de référence, et en particulier d'autres facteurs environnementaux de la tuile tels que l'utilisation des sols, les niveaux de bruit, l'activité anthropique, la densité routière et/ou la densité industrielle.

7. Procédé selon l'une des revendications précédentes, **caractérisé en ce que** les probabilités de présence associées aux cubes anthropiques et/ou aux cubes de la structure anthropique considérée sont mathématiquement interpolées avec les probabilités de présence au sein de l'ensemble des tuiles considérées, en relation avec et/ou en conjonction avec d'autres considérations dépendantes du temps concernant le comportement de l'espèce, en particulier le temps que l'organisme passe en dehors du point de référence, en particulier multipliée, afin de calculer la probabilité d'évitement, d'attraction et/ou de collision.

8. Procédé selon l'une des revendications précédentes, dans lequel, pour déterminer la probabilité d'évitement, d'attraction et/ou de collision, la probabilité relative de présence dans les cubes anthropiques par rapport à la probabilité de présence en dehors du point de référence, et/ou dans lequel, pour déterminer la probabilité d'évitement, et/ou de collision, le temps absolu passé dans les cubes anthropiques est déterminé, en particulier en multipliant la durée d'activité typique de l'espèce par la probabilité relative de présence dans les cubes anthropiques.

9. Procédé selon l'une quelconque des revendications précédentes, **caractérisé en ce que** le procédé est mis en œuvre pour une structure anthropique, et en particulier un emplacement et/ou un tracé de la structure anthropique, à plusieurs reprises pour différents points de référence, en particulier une pluralité et/ou une grille de points de référence et/ou avec un point de référence par tuile, dans lequel, en particulier, les mêmes tuiles et/ou longueurs d'arête sont utilisées et/ou une probabilité de point de référence, en particulier une probabilité de recherche de nourriture, de repos et/ou de reproduction, est et/ou sont attribuées, et/ou les probabilités déterminées pour les points de référence dans chaque cas, en particulier les probabilités d'évitement, d'attraction ou de collision, sont additionnées.

10. Procédé selon l'une des revendications précédentes, **caractérisé en ce que** le procédé est mis en œuvre pour différents emplacements ou tracés de la structure anthropique, dans lequel, en particulier, les mêmes tuiles et/ou longueurs d'arête sont utilisées, et, en particulier, les probabilités d'évitement, d'attraction et/ou de collision déterminées pour les différents emplacements ou tracés de la structure anthropique sont comparées.

11. Procédé selon l'une quelconque des revendications précédentes, dans lequel les informations sur les types d'utilisation des sols comprennent des informations sur les types de végétation, comprenant notamment les catégories prairies, forêts, terres arables, et/ou sur l'utilisation anthropique des sols, comprenant notamment les catégories agglomérations, routes, surfaces imperméables et/ou des informations provenant de Copernicus CORINE Land Cover, Copernicus High Resolution Layer et/ou OpenStreetMap.

12. Procédé selon l'une quelconque des revendications précédentes, dans lequel la valeur calculée de la durée absolue de séjour à l'intérieur des cubes anthropiques est convertie en un nombre de traversées de la structure en utilisant et en évaluant des vitesses de déplacement et des trajectoires spécifiques à l'espèce, déterminées empiriquement.
